(19) Europäisches Patentamt / European Patent Office / Office européen des brevets

(11) **EP 1 100 217 B1**

(12) **EUROPEAN PATENT SPECIFICATION**

(45) Date of publication and mention
of the grant of the patent:
**28.03.2007 Bulletin 2007/13**

(51) Int Cl.:
***H04B 10/18*** *(2006.01)*

(21) Application number: **00117004.2**

(22) Date of filing: **08.08.2000**

(54) **Device for compensating polarization mode dispersion in an optical communication system**

Vorrichtung zur Kompensation von Polarisationsmodendispersion in einem optischen Übertragungssystem

Dispositif de compensation de dispersion de polarisation de mode dans un système de communication optique

(84) Designated Contracting States:
**AT BE CH CY DE DK ES FI FR GB GR IE IT LI LU MC NL PT SE**

(30) Priority: **09.11.1999 JP 31889499**

(43) Date of publication of application:
**16.05.2001 Bulletin 2001/20**

(73) Proprietor: **MITSUBISHI DENKI KABUSHIKI KAISHA**
**Chiyoda-ku**
**Tokyo 100-8310 (JP)**

(72) Inventors:
• **Sugihara, Takashi**
**Chiyoda-ku,**
**Tokyo 100-8310 (JP)**
• **Motoshima, Kuniaki**
**Chiyoda-ku,**
**Tokyo 100-8310 (JP)**

(74) Representative: **Pfenning, Meinig & Partner GbR**
**Patent- und Rechtsanwälte**
**Theresienhöhe 13**
**80339 München (DE)**

(56) References cited:
**EP-A- 0 716 516**     **US-A- 5 371 758**
**US-A- 5 859 939**     **US-A- 5 956 440**

• **ROSENFELDT H ET AL: "FIRST ORDER PMD-COMPENSATION IN A 10 GBIT/S NRZ FIELD EXPERIMENT USING A POLARIMETRIC FEEDBACK-SIGNAL" 25TH EUROPEAN CONFERENCE ON OPTICAL COMMUNICATION. (ECOC'99). NICE, FRANCE, SEPT. 27 - 30, 1999. REGULAR AND INVITED PAPERS, EUROPEAN CONFERENCE ON OPTICAL COMMUNICATION (ECOC), PARIS: SEE, FR, vol. II OF II, 26 September 1999 (1999-09-26), pages II-134-II-135, XP001035416 ISBN: 2-912328-12-8**

**Description**

FIELD OF THE INVENTION

The present invention relates to an optical transmission system which compensates polarization mode dispersion characteristic which deteriorates the quality of a transmission signal when super-high speed super-long distance optical transmission is carried out.

BACKGROUND OF THE INVENTION

When light passes through a substance having different refractive indexes, propagation speed of the light in the substance varies with the refractive indexes. Moreover, when a polarization direction of the incident light varies, the propagation of the light in a material with various refractive index (that is, anisotropic material) causes a phenomenon that delay time after passing the material varies according to a state of polarization in the material. Difference in the delay time of the light polarized in the respective polarization directions in the material is called a polarization mode dispersion (hereinafter, referred to as "PMD").

In general, slight anisotropy occurs locally along a longitudinal direction of a single mode fiber which is used on an optical transmission line. When light propagates through such a fiber, a difference in delay which depends on the polarization direction of a light signal occurs in a portion of the light signal where the anisotropy occurs. When the difference in delay caused by the difference in polarization is accumulated in the optical transmission line, deterioration of a signal waveform is experienced at the receiving terminal.

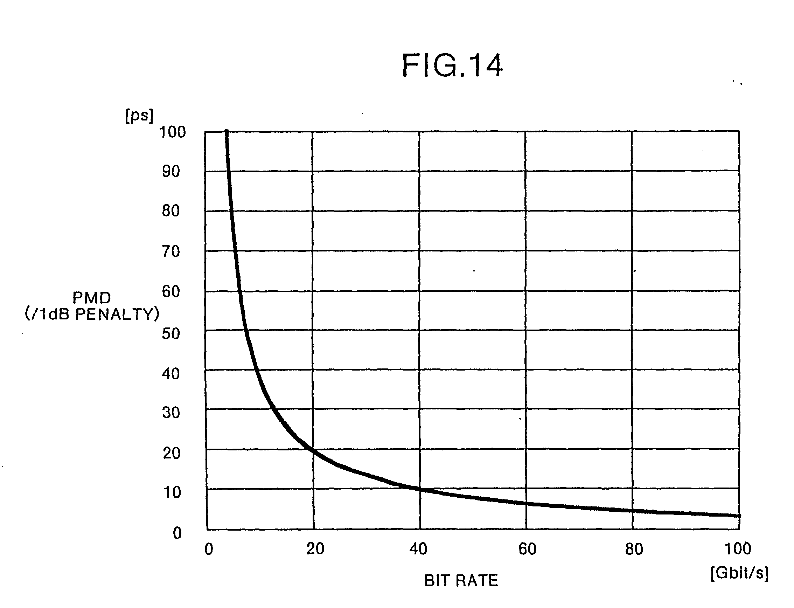

Fig. 14 is a diagram showing a relationship between PMD of the optical transmission line which causes 1dB penalty in the optical transmission of an NRZ (Non-Return to Zero) signal whose pulse width is equal to a pulse interval and an optical transmission speed (bit rate). The relationship shown in Fig. 14 is obtained based on the equations described in "Fading in Lightwave Systems Due to Polarization-Mode Dispersion" (C. D. Poole, R. W. Tkach, A. R. Chraplyvy, and D. A. Fishman, IEEE Photonics Technology Letters, Vol. 3, No. 1, January 1991, pp. 68-70).

In the above reference, the relationship between $\Delta\tau$ (that is, amplitude of PMD) when power penalty is deteriorated by 1 dB and a pulse width T of the NRZ signal (= 1/B: "B" is a bit rate) has been represented as follows:

$$\Delta\tau \ / \ T \ \fallingdotseq \ 0.4 \qquad\qquad \cdots \ (1)$$

When the relationship between $\Delta\tau$ when the power penalty is deteriorated by 1 dB and the bit rate B of the NRZ signal is obtained based on the equation (1), the result shown in Fig. 14 is obtained. As a result, when the NRZ signal of 40 Gbit/s, for example, is transmitted optically, PMD of the optical transmission line should be restrained to not more than 10 ps.

Meanwhile, the actual optical transmission line has PMD of about 0.1 ps/√ distance (km) on an average even in the case of fiber of low PMD. This means that PMD of about 10 ps occurs after every 10000 km. Further, PMD in the optical transmission line has a characteristic that PMD fluctuates with time. Therefore, after optical fiber is installed, PMD should be compensated according to the time fluctuation of PMD.

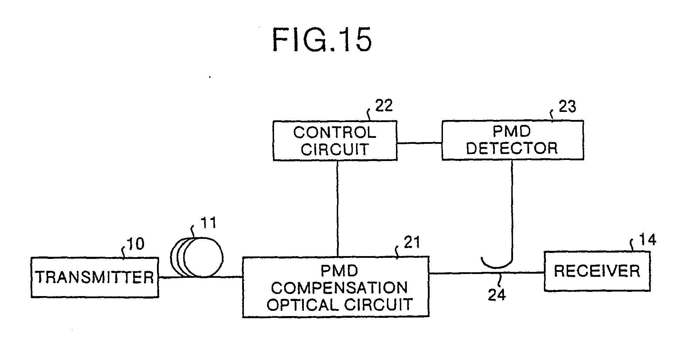

A PMD compensation circuit shown in Fig. 15, for example, is used to compensate PMD. As shown in Fig. 15, while a light signal transmitted from a transmitter 10 is propagating through an optical transmission line 11, waveform distortion occurs in the light signal due to PMD. A part of the optical signal is fetched by an optical tap 24 through the optical transmission line 11 just before it is input into a receiver 14. A PMD detector 23 detects PMD in this optical signal. A value of PMD detected by the PMD detector 23 is input into a control circuit 22. The control circuit 22 determines an amount of compensation with respect to the detected PMD and outputs the compensation amount to a PMD compensation optical circuit 21. The PMD compensation optical circuit 21 compensates for the PMD in the optical signal on the optical transmission line 11 and outputs the light signal to a lower stream side of the optical transmission line 11. As a result, the receiver 14 receives the optical signal whose PMD has been compensated.

Japanese Patent Application Laid-Open (JP-A) No. 7-231297 discloses a polarization mode dispersion compensation apparatus which is inserted into an optical transmission line and compensates PMD. In this polarization mode dispersion compensation apparatus, a light signal with PMD is received via an equalizing optical circuit, and a code string is once identified. Then, the signals before and after the code string identification are compared. A difference signal is obtained, the difference signal is rectified and integrated so that an equalizing error signal is generated. Parameter (s) of the equalizing optical circuit is changed slightly and a direction in which the equalizing error signal decreases is found. Parameter control is repeated by a control loop so that the equalizing error signal is made to be minimal automatically, and as a result quality deterioration of the light signal due to PMD becomes minimal.

When polarization mode coupling on the optical transmission line 11 is weak and an influence of a non-linear optical effect on the optical transmission line 11 is weak, as shown in Fig. 15, PMD just before the receiver 14 can be compensated collectively. However, when the polarization mode coupling is great and when the influence of the non-linear optical effect cannot be ignored, then even if the difference in delay between the polarization modes due to PMD on the optical transmission line 11 occurs only once, the degree of the non-linear optical effects respectively of the polarization modes varies. Moreover, since the coupling of powers between the polarization modes occurs, the light signal waveforms of the polarization modes are different from each other. Accordingly, even if PMD is compensated collectively just before the receiver 14, there is a problem that it is difficult to reproduce the light signal waveform.

When the light signal is a light wavelength multiplex signal, it is necessary to provide a certain number of PMD compensation circuits according to the wavelength multiplex number. For this reason, miniaturization of the PMD compensation circuit is desired.

US 5 859 939 A shows an optical transmission line with an optical transmitter at one end and a receiver at the other end. Line amplifiers and/or repeaters can be included between the transmitter and the receiver. At the receiver end of the transmission line, one PMD compensator is provided near the receiver.

In this document more than one repeater can be included, however, PMD compensation is performed with exactly one PMD compensation unit at the end of the transmission line, immediately adjacent to the receiver.

US-A-5 956 440 discloses an optical transmission line for wavelength division multiplexed optical signals. Therein wavelength dispersion for each wavelength is independently compensated in a plurality of repeated spans.

## SUMMARY OF THE INVENTION

It is an object of the present invention to obtain an optical transmission system which is capable of reproducing a light signal waveform by compensating PMD securely and to obtain a miniaturized configuration for compensation of PMD.

This problem is solved by the optical transmission system according to claim 1 or claim 2. Further improvements of the optical transmission system are provided in the dependent claims.

An optical transmission system according to the present invention has one or more optical repeater amplifiers on an optical transmission line between an optical transmitter and an optical receiver and comprises a compensation unit which compensates polarization mode dispersion for each distance range of the optical transmission line where polarization mode dispersion can be compensated according to a degree of polarization mode coupling. A compensation unit is provided for each optical transmission distance range where the polarization mode dispersion can be compensated according to a degree of polarization mode coupling. The polarization mode dispersion which occurs on the optical transmission line is compensated securely using this compensation unit.

The compensation unit comprises a wavelength splitter, a polarization mode dispersion compensation unit, and a wavelength multiplexer. The wavelength splitter splits an input light wavelength multiplex signal for each wavelength or channel. The polarization mode dispersion compensation units compensate polarization mode dispersion for light signals split by the wavelength splitter. The wavelength multiplexer multiplexes the light signals of each wavelength or channel compensated by the polarization mode dispersion compensation units so as to output the multiplexed signal. Accordingly, the polarization mode dispersion of the light wavelength multiplex signal can be compensated.

Further, a compensation unit may be provided at the end or in a vicinity of the end of the optical transmission line, namely, just before the optical receiver so as to compensate polarization mode dispersion which remains finally.

Further, a polarization adjustment unit may be provided at the end or in a vicinity of the end of the optical transmission line. This polarization adjustment unit makes adjustment so that a light signal having a polarization state where quality deterioration of the light signal at the end of the optical transmission line becomes minimal is input.

Further, the wavelength splitter, the first wavelength multiplexer, the second wavelength multiplexer, the wavelength multiplexer, the polarization mode dispersion compensation units and the polarization synthesizing unit which compose the compensation units may be connected by polarization maintaining fibers. Therefore, the polarization between the optical parts in the compensation unit is held.

Further, the compensation unit or the polarization mode dispersion compensation unit may comprise an optical system. Further, the optical receiver comprises a detector, and a plurality of control units. The optical receiver detects a polarization mode dispersion amount using the detection unit. The plurality of control units compensate a light delay difference corresponding to the polarization mode dispersion amount by means of the optical system of the compensation unit or the polarization mode dispersion compensation units according to the polarization mode dispersion amount detected by the detector. Accordingly, the structures of the compensation unit or the polarization mode dispersion compensation unit arranged on the optical transmission line are miniaturized and simplified.

Further, an optical amplification polarization adjustment unit may be provided. This optical amplification polarization adjustment unit adjusts a light signal so that the light signal has an optimal polarization direction corresponding to a polarization direction of an optical amplification pump laser in the optical repeater amplifier at the later stage. In other words, the light signal has a polarization direction intersecting perpendicularly to the polarization direction of the pump laser to be used in the optical amplifier at the later stage. The light amplification polarization adjustment unit synthesizes the polarization and outputs the light signal to the optical repeater amplifier at the later stage. At least optical amplification of the optical repeater amplifier at the later stage is performed optimally by the light signal having the optimal polarization direction input from the optical amplification polarization adjustment unit. The light signal can be selectively adjusted so as to have a polarization direction where an influence of PMD becomes small on the optical transmission line at the later stage.

Further, said optical amplification polarization adjustment unit may be connected with the later stage of the compensation unit and adjusts a polarization state of a PMD compensated light signal. The optical amplification polarization adjustment unit immediately adjusts the light signal so that the light signal has an optimal polarization direction and outputs it.

Further, a minimal PMD set-use polarization adjustment unit may be provided on the optical transmission line. This polarization adjustment unit adjusts a light signal so that its polarization state is such that quality deterioration of light signal input into the optical receiver becomes minimal.

Further, the compensation unit may be incorporated in the optical repeater amplifier, particularly in the optical amplifier. Environmental resistance structures such as pressure resistance, water resistance and the like which are required respectively in the compensation unit and the optical repeater amplifiers are collected as one structure.

Further, the compensation unit may be incorporated in the optical receiver, particularly in the optical amplifier. Accordingly, PMD of a light signal input into the optical receiver can be compensated and quality deterioration of the light signal due to PMD of the light signal can be suppressed finally.

Other objects and features of this invention will become apparent from the following description with reference to the accompanying drawings.

BRIEF DESCRIPTION OF THE DRAWINGS

Fig. 1 is a diagram showing an entire structure of an optical transmission system.

Fig. 2 is a block diagram showing a configuration of a PMD compensation circuit shown in Fig. 1.

Fig. 3 is a diagram showing a detailed configuration of the PMD compensation circuit shown in Fig. 1.

Fig. 4A and Fig. 45 are diagrams showing a PMD compensation operation using the PMD compensation circuit.

Fig. 5 is a diagram showing an entire structure of a further optical transmission system.

Fig. 6 is a diagram showing an entire structure of a further optical transmission system.

Fig. 7 is a block diagram showing a configuration of the PMD compensation circuit of the optical transmission system according to an embodiment of the present invention.

Fig. 8 is a block diagram showing a configuration of the PMD compensation circuit of a further optical transmission system.

Fig. 9 is a block diagram showing a configuration of the PMD compensation circuit of a further optical transmission system.

Fig. 10 is a block diagram showing a configuration of a further PMD compensation circuit of the optical transmission system.

Fig. 11 is a diagram showing a portion of a structure of a further optical transmission system.

Fig. 12 is a diagram showing a portion of a structure of a further optical transmission system.

Fig. 13 is a diagram showing a portion of a structure of a further optical transmission system.

Fig. 14 is a diagram showing a relationship between PMD of an optical transmission line which causes 1 dB penalty in optical transmission of an NRZ signal and an optical transmission speed.

Fig. 15 is a diagram showing a structure of a prior optical transmission system using a PMD compensation circuit.

Examples

Examples of an optical transmission system will be detailed below with reference to the attached drawings.

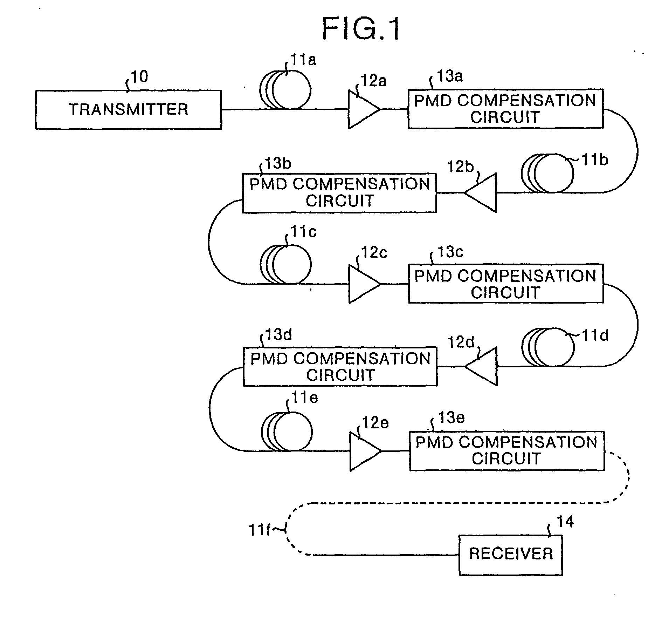

Fig. 1 is a diagram showing an entire structure of an optical transmission system according to a first example. As shown in Fig. 1, the optical transmission system has a transmitter 10 transmitting a light signal, and a receiver 14 receiving the light signal. The transmitter 10 and the receiver 14 are connected by optical transmission line 11 (11a to 11f) composed of optical fibers. A plurality of optical repeater amplifiers 12a to 12e and a plurality of PMD compensation circuits 13a to 13e are provided on the optical transmission line 11. The optical repeater amplifiers 12a to 12e amplify an input light signal, and the PMD compensation circuits 13a to 13e compensate PMD in the light signal. Distances between the optical repeater amplifiers 12a to 12e are repeated spans, and the PMD compensation circuits 13a to 13e shown in Fig. 1 are provided respectively in the repeated spans.

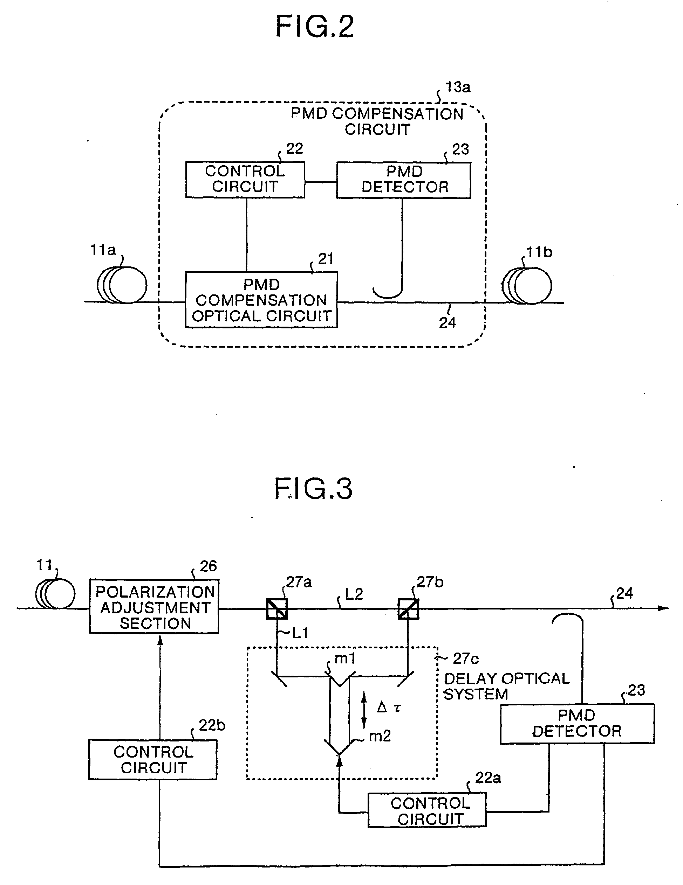

Fig. 2 is a block diagram showing a configuration of the PMD compensation circuit 13a. Optical tap 24 of the PMD compensation circuit 13a fetches a portion of the light signal on the optical transmission line 11b. A PMD detector 23 detects waveform deterioration due to PMD based on the light signal fetched by the optical tap 24, and transmits a compensation amount with respect to PMD waveform distortion to a control circuit 22. The control circuit 22 outputs direction information, which compensates the PND waveform distortion of the light signal input from the optical transmission line 11a based on the input compensation amount, to a PMD compensation optical circuit 21. The PMD compensation optical circuit 21 compensates the PMD waveform distortion based on the direction information. The light signal where the PMD waveform distortion is compensated is transmitted to the optical transmission line 11b. A portion of the light signal is fetched by the optical tap 24 so that feedback control is achieved. The other PMD compensation circuits 13b to 13e have the same configuration as that of the PMD compensation circuit 13a.

Fig. 3 is a diagram showing a detailed configuration of the PMD compensation circuit 13a. Polarization adjustment section 26, polarization beam splitters 27a and 27b and a delay optical system 27c of Fig. 3 correspond to the PMD compensation optical circuit 21 shown in Fig. 2. Control circuits 22a and 22b correspond to the control circuit 22. The polarization adjustment section 26 optimizes a polarization state of the PMD-distorted light signal input from the optical transmission line 11. In other words, the polarization adjustment section 26 rotates and adjusts the polarization state. As a result, the polarization mode component where time is delayed due to PMD is separated by the polarization beam splitter 27a from polarization eigenmode components of the light signal towards the delay optical system 27c. The polarization adjustment section 26 outputs the light signal to the polarization beam splitter 27a.

The polarization beam splitter 27a separates the light signal into a polarized light L1 and a polarized light L2 which are the polarization eigenmode components so as to compensate time delay due to PMD. For example, time of the light signal of the polarized light L1 is delayed by $\Delta\tau$ relatively from the light signal of the polarized light L2 due to PMD caused on the optical transmission line. The light signal component of the polarized light L1 is output to the delay optical system 27c, and the light signal component of the polarized light L2 is output to the polarization beam splitter 27b. The delay optical system 27c delays the input light signal of the polarized light L1 by delay difference $\Delta\tau$ between the light signals of the polarized light L1 and the polarized light L2 due to PMD according to control of the control circuit 22a. The delay optical system 27c outputs the light signal of the polarized light L1 to the polarization beam splitter 27b.

The delay difference $\Delta\tau$ is set mainly by adjusting a distance between mirrors m1 and m2 in the delay optical system 27c and thus changing the travelling time of the light signal of the polarized light L1. The distance between the mirrors m1 and m2 is determined by the control circuit 22a. The PMD detector 23 detects waveform deterioration due to PMD based on a portion of the light signal fetched by the optical tap 24, and calculates a compensation amount for PMD waveform distortion and transmits 25 the compensation amount to the control circuits 22a and 22b. The control circuit 22a obtains a delay difference $\Delta\tau$ corresponding to the input compensation amount, and calculates the distance between the mirrors m1 and m2 corresponding to the obtained delay difference $\Delta\tau$. The control circuit 22a moves the mirror m2 so that the distance between the mirrors m1 and m2 is set to the calculated distance. The control circuit 22b provides a control to adjust the polarization state in the polarization adjustment section 26 so that the PMD waveform distortion becomes minimal. Thus, the control circuit 22b provides a control to securely branch the light signal of the polarized light L1 and the light signal of the polarized light L2 which are the polarization eigenmode via the polarization beam splitter 27a.

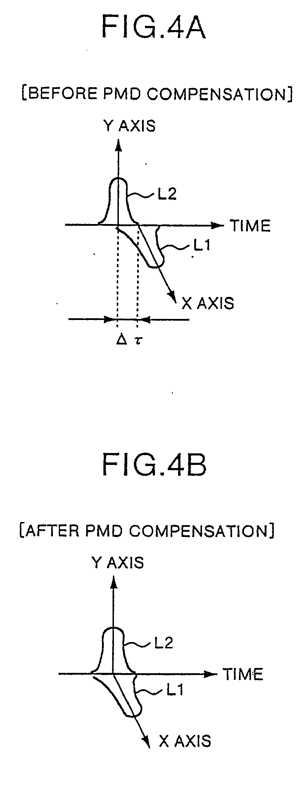

The PMD compensation process will be explained with reference to Fig. 4A and Fig. 4B. Fig. 4A shows a relationship between polarized light and orthogonally polarized light before PMD compensation. Fig. 4B shows a relationship between the polarized light and the orthogonally polarized light after PMD compensation. In these figures, when the polarization adjustment section 26 adjusts the polarization state with respect to the polarization beam splitter 27a correctly, the light signal of the polarized light L2 is represented as an orthogonal polarization component with respect to the light signal of the polarized light L1. The light signal of the polarized light 12 is delayed by the delay difference $\Delta\tau$ due to PMD distortion from the light signal of the polarized light L1 so as to be transmitted. Since the delay optical system 27c delays the light signal of the polarized light L1 by the delay difference $\Delta\tau$, as shown in Fig. 45, the delay difference $\Delta\tau$ between the light signals of the polarized light L1 and L2 is removed. As a result, the PMD distortion is compensated.

The polarization beam splitter 27b multiplexes the light signal of the polarized light L2 directly input from the polarization beam splitter 27a and the light signal of the polarized light L1 input from the delay optical system 27c. The polarization beam splitter 27b outputs the multiplexed light signal as a light signal where PMD is compensated to the optical transmission line 11. A portion of the light signal is fetched by the optical tap 24, and PMD is compensated by a feedback loop.

As for PMD which occurs on the optical transmission line 11 in each repeated span, the polarization mode coupling is generally weak, and an influence of a non-linear optical effect can be ignored. Namely, on the assumption that linear compensation can be executed, linear PMD compensation circuits 13 are provided respectively for the repeated spans in the first embodiment. As a result, the PMD compensation circuit 13 compensates PMD securely before PMD which cannot be compensated occurs in the light signal. Therefore, the receiver 14 can securely reproduce the light signal waveform transmitted by the transmitter 10.

When PMD of the light signal due to the distance of one repeated span cannot be compensated by the PMD compensation circuit 13, the PMD compensation circuit 13 may be provided in each distance where it can compensate PMD.

In this first example, it has been shown that the PMD compensation circuits 13 are independently provided on the optical transmission line 11. However, the PMD compensation circuits 13 may be incorporated in respective optical repeater amplifiers 12. In such a case, respective sections on the light transmission line 11 can be constituted as collectively as possible. As a result, environmental resistance structures such as pressure resistance and water resistance which are required for the PMD compensation circuits 13 and the optical repeater amplifiers 12 can be simple.

Further, the PMD compensation circuits 13 are provided on 15 the optical transmission line 11. However, the PMD compensation circuit may be provided in a not shown optical amplifier in the receiver 14 and compensate PMD of the light signal.

According to the first example, the power coupling between the polarization modes is weak, and the PMD compensation circuit 13 is provided in each distance of the optical transmission line where PMD that the influence of the non-linear optical effect can be ignored occurs. Moreover, the linear PMD compensation is executed before PMD spreads. As a result, the waveform deterioration of the light signal due to PMD occurred on the optical transmission line 11 can be securely restrained. The receiver 14 can securely reproduce the light signal waveform.

Second example of an optical transmission system will be explained. In the above explained first example, the power coupling between the polarization modes is weak, further, the PMD compensation circuit 13 is provided for each repeated span where PMD that the influence of the non-linear optical effect can be ignored occurs. However, in the second example, the PMD compensation circuits 13 are provided respectively on the optical transmission line 11 just before the receiver 14 or in the vicinity of the receiver 14.

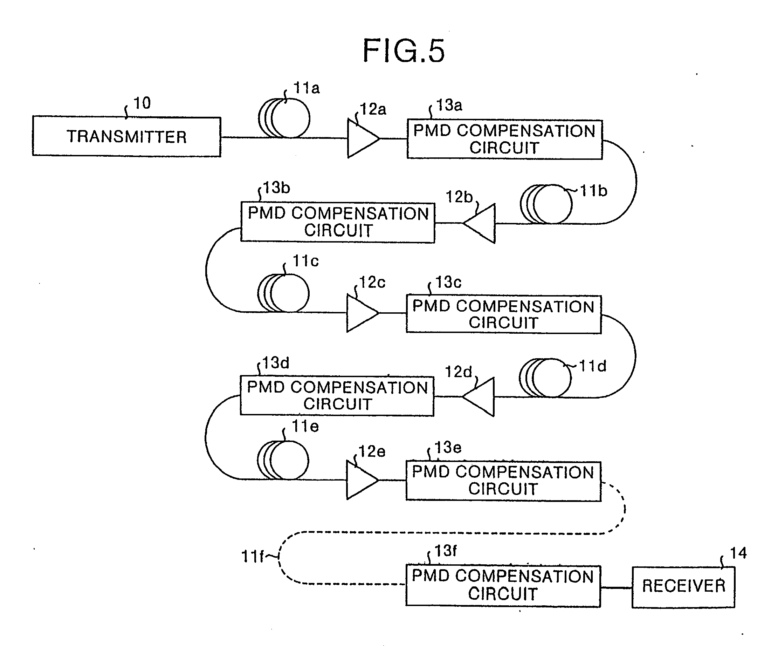

Fig. 5 shows the entire structure of the optical transmission system according to the second example. As shown in Fig. 5, a PMD compensation circuit 13f having the structure same as that of the PMD compensation circuit 13 shown in the first example is provided on the optical transmission line 11 just before the receiver 14. The other parts of the structure are the same as those in the first example, and they have been provided with the same legends.

PMD of the light signal is compensated by the PMD compensation circuits 13 (13a to 13e) from the transmitter 10 via the optical transmission line 11 to the PMD compensation circuit 13f. However, the PMD compensation circuit 13f further compensates PMD which remains in the light signal where PMD is compensated at the final stage, and outputs the light signal that PMD is compensated to the receiver 14.

According to the second example, since the PMD of the light signal is compensated just before or in the vicinity of the receiver 14, the receiver 14 can reproduce the light signal waveform more securely. Particularly, since PMD on the optical transmission line 11 changes with time, there is a possibility that the PMD compensation circuits 13a to 13e cannot follow the change in PMD with time. PMD which cannot be compensated in such a case can be compensated securely.

A third example of an optical transmission system will be explained. In this third example, in addition to the structure of the second embodiment, a polarization adjustment section is further provided at the end or in the vicinity of the transmitter 10 on the light transmission line 11. This polarization adjustment section adjusts the polarization state of a light signal so that the influence of PMD of the light signal at the end of the receiver 14 becomes minimal.

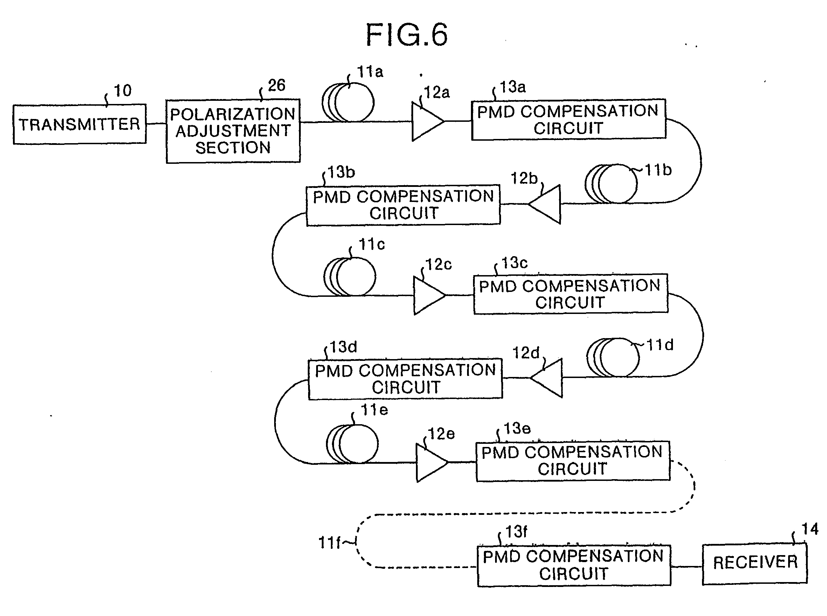

Fig. 6 shows the entire structure of the optical transmission system according to the third example. As shown in Fig. 6, the polarization adjustment section 26 is provided just after the transmitter 10 provided on the optical transmission line 11. This polarization adjustment section 26 adjusts the polarization state so that PMD of the light signal or PMD distortion amount which is detected by the receiver 14 becomes minimal at the end of the receiver 14. The polarization adjustment section 26 transmits the adjusted light signal to the optical transmission line 11. The other parts of the structure are the same as those in the second example, and they have been provided with the same legends.

As for adjustment of the polarization state by the 5 polarization adjustment section 26, the polarization state is determined previously when the optical transmission line of the optical transmission system is installed so that the influence of PMD is minimal. The polarization adjustment section 26 transmits the light signal having the determined polarization state to the optical transmission line 11. If the change in PMD with time is great, another communication section or another optical transmission line may be used so that the polarization state is adjusted always or periodically.

According to the third embodiment, the polarization 15 adjustment section 26 is provided just after the transmitter 10, and the light signal having the polarization state where the influence of PMD is minimal on the receiver 14 is transmitted. As a result, the waveform distortion due to PMD occurring on the optical transmission line 11 can be suppressed minimally, and the receiver 14 can reproduce the light signal waveform more securely.

A forth example will be explained. In the first to third examples, the light signal was not multiplexed. However, in the forth embodiment, even in the case where the light signal of the optical transmission system is a light wavelength multiplex signal where the wavelength is multiplexed, the PMD compensation explained in the first to third examples can be executed.

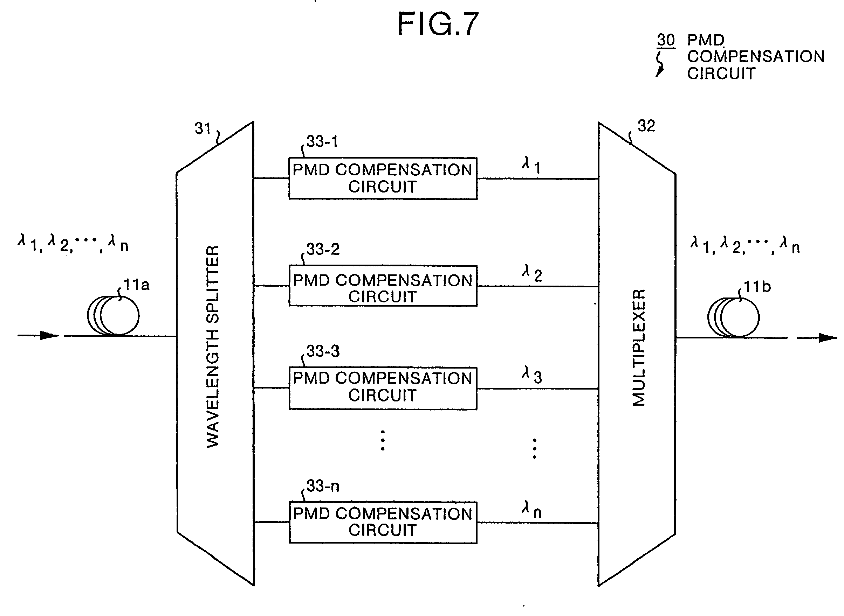

Fig. 7 is a diagram showing a configuration of the PMD 5 compensation circuit of the optical transmission system according to the forth example, which is an embodiment of the invention. PMD compensation circuit 30 may be provided instead of the PMD compensation circuits 13 in the first to third example. Other parts of the optical system may be the same as those in the first to third examples.

As shown in Fig. 7, a light wavelength multiplexed signal where a light wavelength multiplex number is "n" is transmitted to an optical transmission line 11a and input into the PMD compensation circuit 30. The PMD compensation circuit 30 has a wavelength splitter 31, PMD compensation circuits 33-1 to 33-n corresponding to the light wavelength multiplex number, and a multiplexer 32. The wavelength splitter 31 splits a light signal for respective multiplexed wavelengths $\lambda_1$ to $\lambda_n$ or for channels corresponding to the wavelengths. The PMD compensation circuits 33-1 to 33-n have the configuration which is the same as that of the PMD compensation circuit 13 shown in the first to third embodiments. The PMD compensation circuits 33-1 to 33-n compensate PMD for each wavelength split by the wavelength splitter 31 and output the light signals where PMD is compensated to the multiplexer 32. The multiplexer 32 multiplexes the light signals output from the PMD compensation circuits 33-1 to 33-n so as to output the multiplexed light signal to the optical transmission line 11b.

According to the forth example, even in the case of the light wavelength multiplex signal, PMD can be compensated for each wavelength corresponding to respective channels. Similarly to the first to third example, PMD of the light signal which is the light wavelength multiplex signal is compensated securely. As a result, the receiver 14 can reproduce the light signal waveform for each light wavelength multiplex securely.

A fifth example of an optical transmission system will be explained. In the above explained forth example, PMD is compensated for the respective wavelengths $\lambda_1$ to $\lambda_n$ where the light wavelength is multiplexed. However, in the fifth example, PMD is compensated in block unit where wavelengths are collected in a predetermined block.

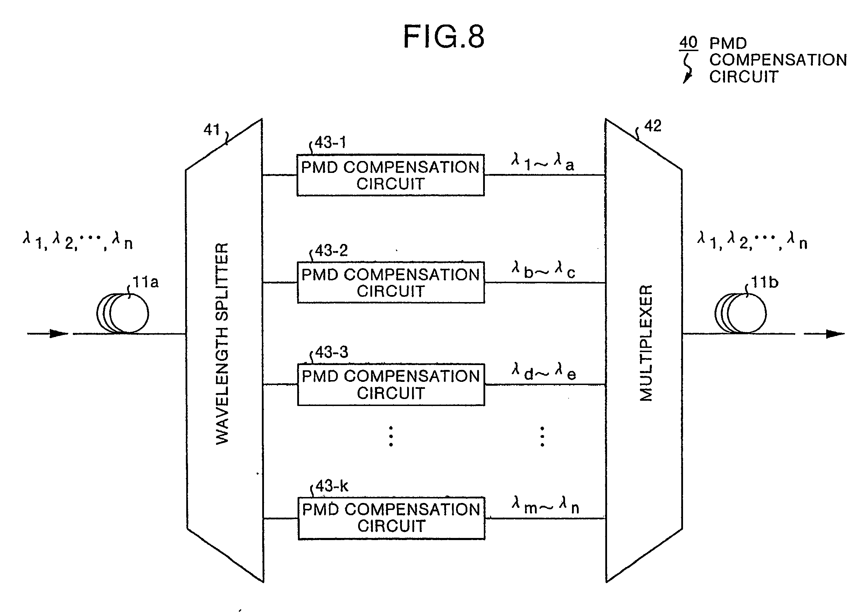

Fig. 8 is a diagram showing a configuration of the PMD compensation circuit of the optical transmission system according to the fifth example. PMD compensation circuit 40 may be provided instead of the PMD compensation circuits 13 in the first to third examples. Other parts of the optical system may be the same as that shown in the first to third examples.

In Fig. 8, a light wavelength multiplex signal where a light wavelength multiplex number is "n" is transmitted to the optical transmission line 11a so as to be input into the PMD compensation circuit 40. The PMD compensation circuit 40 has a wavelength splitter 41, PMD compensation circuits 43-1 to 43-k and a multiplexer 42. The wavelength splitter 41 splits a light wavelength multiplex signal for each block where respective wavelengths $\lambda_1$ to $\lambda_n$ where light wavelength is multiplexed or respective channels are collected as a plurality of wavelengths or channels. The PMD compensation circuits 43-1 to 43-k corresponding to a number of blocks "k" compensate PMD of the light signals of the respective blocks. For example, the PMD compensation circuit 43-1 compensates PMD of one of the light signals having the wavelengths $\lambda_1$ to $\lambda_n$ which are split by the wavelength splitter 41. The configuration of the PMD compensation circuits 43-1 to 43-k is the same as that of the PMD compensation circuit 13 shown in the first to third embodiments. The multiplexer 42 multiplexes the light signals where PMD is compensated respectively by the PMD compensation circuits 43-1 to 43-k so as to output the multiplexed light signal to the optical transmission line 11b.

According to the fifth example, the light wavelength multiplex signal is split for each block where a plurality of wavelengths or channels are collected. PMD of the split light signals in each block is compensated. As a result, a number of PMD compensation circuits can be reduced, and the PMD compensation circuits can be miniaturized.

A sixth example of the present invention will be explained. In the above explained fifth example, the wavelengths $\lambda_1$ to $\lambda_n$ where the wavelength is multiplexed are split per wavelength in predetermined block unit, and PMD is compensated for split light signals. However, in the sixth example, desired wavelengths or channels are collected in each block.

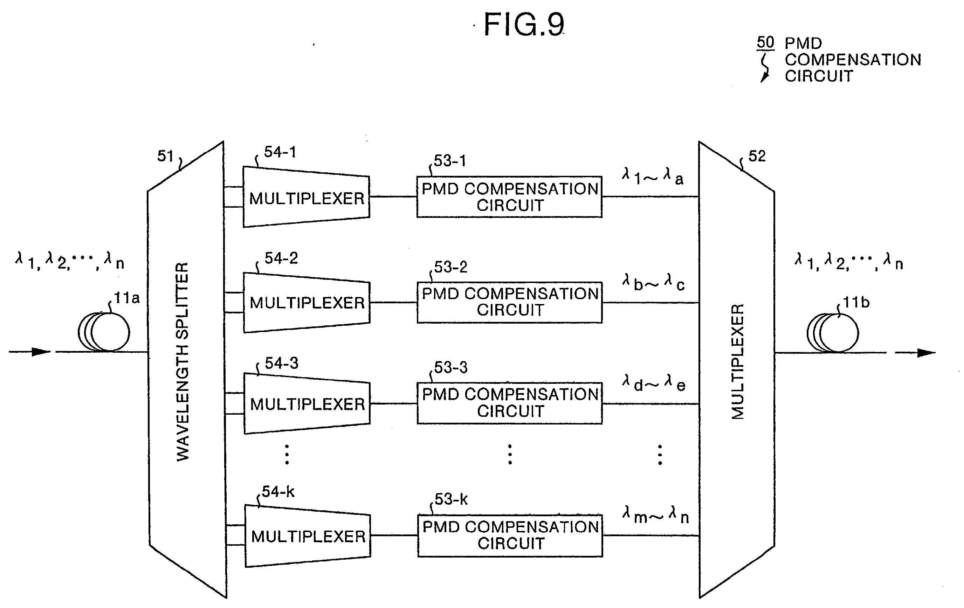

Fig. 9 is a diagram showing a configuration of the PMD compensation circuit of the optical transmission system according to the sixth example. PMD compensation circuit 50 may be provided instead of the PMD compensation circuits 13 in the first to third example. Other parts of the optical system may be the same as those in the first to third examples.

In Fig. 9, a light wavelength multiplex signal where a light 15 wavelength multiplex number is "n" is transmitted to the optical transmission line 11a so as to be input into the PMD compensation circuit 50. The PMD compensation circuit 50 has a wavelength splitter 51, multiplexers 54-1 to 54-k corresponding to a number of blocks "k", PMD compensation circuits 53-1 to 53-k corresponding to a number of blocks "k", and a multiplexer 52. The wavelength splitter 51 splits a light wavelength multiplex signal for respective wavelengths $\lambda_1$ to $\lambda_n$ where light wavelength is multiplexed or respective channels. The multiplexers 54-1 to 54-k multiplex light signals which are split by the wavelength splitters 51 for each block where a plurality of desired wavelengths or desired channels are collected. The light signals multiplexed in block unit are input into the PMD compensation circuits 53-1 to 53-k corresponding to the multiplexers 54-1 to 54-k, and PMD is compensated for the light signals of the respective PMD compensation circuits.

In Fig. 9, similarly to the fifth example, the PMD compensation circuit 53-1 compensates PMD of one of the light signals having wavelengths $\lambda_1$ to $\lambda_n$ split by the wavelength splitter 51. However, in the sixth example, arbitrary wavelengths or channels can be combined in each block. However, the configuration of the PMD compensation circuits 53-1 to 53-k is the same as that of the PMD compensation circuits 13 shown in the first to third examples. The multiplexer 52 multiplexes the light signals where PMD is compensated by the PMD compensation circuits 53-1 to 53-k so as to output the multiplexed light signal to the optical transmission line 11b.

According to the sixth example, the multiplexers 54-1 to 54-k which multiplex the light wavelength multiplex signals of a plurality of desired wavelengths or channels are provided so that the blocks are formed. PMD is compensated by the PMD compensation circuits 35-1 to 53-k whose number is corresponding to a number of blocks. As a result, a number of the PMD compensation circuits 53-1 to 53-k can be reduced, and the whole PMD compensation circuit 50 can be miniaturized. Further, an arbitrary combination of the wavelengths or channels are collected in each block by the multiplexers 54-1 to 54-k. The flexible PMD compensation process can be executed in such a manner that signals of non-adjacent wavelengths or channels, or wavelengths or channels having the same polarization direction are collected in blocks.

A seventh example of an optical transmission system will be explained. In the above explained sixth example, the light signals of desired wavelengths or channels in the light signals having wavelengths $\lambda_1$ to $\lambda_n$ where light wavelength is multiplexed are multiplexed collectively in each block. However, in the seventh example, polarization is synthesized for light signals intersecting perpendicularly to each other of the split light signals instead of using the multiplexers 54-1 to 54-k. PMD is compensated per light signal where polarization is synthesized.

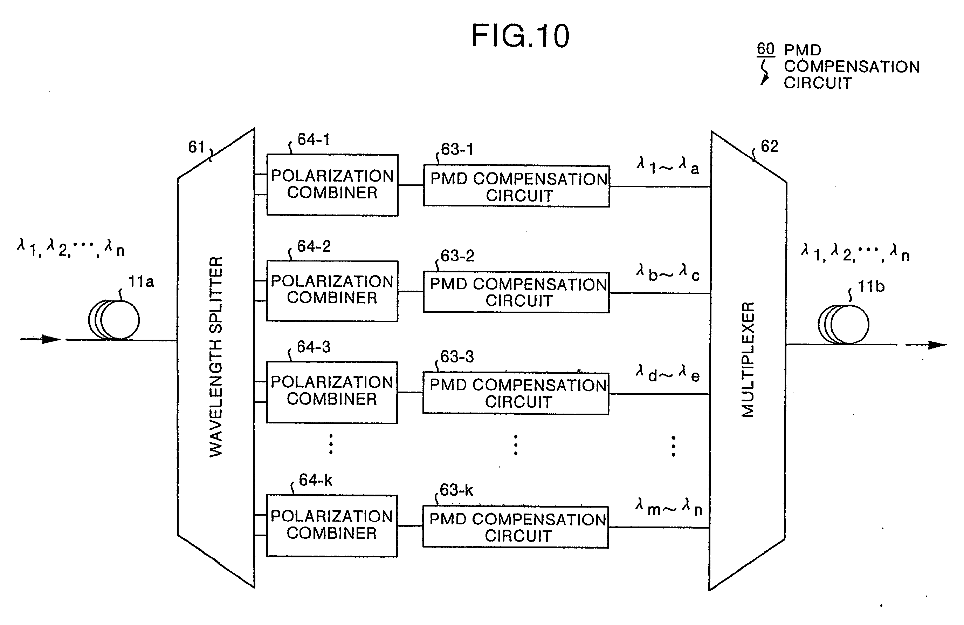

Fig. 10 is a diagram showing a configuration of the PMD compensation circuit of the optical transmission system according to the seventh example. PMD compensation circuit 60 may be provided instead of the PMD compensation circuits 13 in the first to third examples. Other parts of the optical system may be the same as those shown in the first to third examples.

In Fig. 10, a light wavelength multiplex signal where a light wavelength multiplex number is "n" is transmitted to the optical transmission line 11a so as to be input into the PMD compensation circuit 60. The PMD compensation circuit 60 has a wavelength splitter 61, polarization combiners 64-1 to 64- k corresponding to a number of blocks "k", PMD compensation circuits 63-1 to 63-k corresponding to a number of blocks "k", and a multiplexer 62. The wavelength splitter 61 splits a light wavelength multiplex signal for respective wavelengths $\lambda_1$ to $\lambda_n$ or channels where the light wavelength is multiplexed. The polarization combiners 64-1 to 64-k collect a plurality of desired wavelengths or desired channels in each block. However, in the case where split and input light signals of respective wavelengths are substantially linear polarized lights and they intersect perpendicularly to each other, polarization extinction ratio is held in the synthesized light signals. Particularly, in the case where adjacent wavelengths or channels are arranged so as to intersect perpendicularly to their polarization direction, or all the wavelengths or channels are arranged so as to at least intersect perpendicularly to the polarization direction at the time of wavelength multiplexing, multiplexing with the polarization extinction ratio being held is possible.

The light signals in block unit where polarization is synthesized by the polarization combiners 64-1 to 64-k are input into the PMD compensation circuits 63-1 to 63-k corresponding to the polarization combiners 64-1 to 64-k. The PMD compensation circuits 63-1 to 63-k compensate PMD. The configuration of the PMD compensation circuits 63-1 to 63-k is the same as that of the PMD compensation circuit 13 shown in the first to third examples. The multiplexer 62 multiplexes the light signals where PMD is compensated by the PMD compensation circuits 63-1 to 63-1 so as to output the multiplexed light signal to the optical transmission line 11b.

According to the seventh example, in the case where the light wavelength multiplex signal having the wavelength or channel structure with orthogonal polarization directions is input, the polarization combiners 64-1 to 64-k collects wavelengths or channels having the orthogonal polarization directions in each blocks. The light signals where polarization is synthesized are generated, and PMD is compensated per light signal. As a result, the light signals holding polarization extinction ratio can be collected in each block, and PMD can be compensated securely.

Optical connection circuits in the PMD compensation circuits 30 to 60 in the forth to seventh embodiments may be constituted by polarization maintaining fibers. As a result, since polarization between respective optical parts is held, the light branching or light synthesizing process can be executed easily and securely.

An eighth example of an optical transmission system will be explained. In the above explained first to seventh examples, PMD is detected in the PMD compensation circuits 13, 30, 40, 50, and 60, and detected PMD is compensated. However, in the eighth example, the PMD compensation circuits 13, 30, 40, 50, and 60 are controlled by PMD detected in the receiver 14 so that transmission quality characteristic upon receiving is the best. In this case, the optical tap 24, the PMD detector 23 and the control circuit 22 which detect PMD are not provided in the PMD compensation circuits 13, 30, 40, 50, and 60.

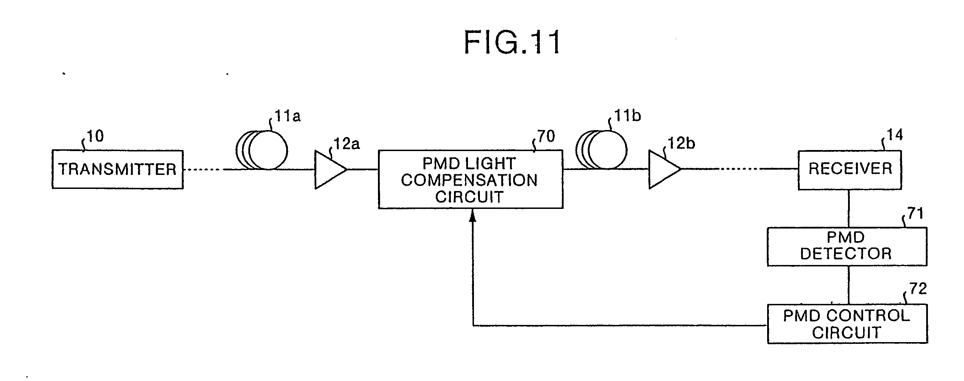

Fig. 11 is a diagram showing a part of the structure of the optical transmission system according to the eighth example. A PMD light compensation circuit 70 shown in Fig. 11 may be provided in place of the PMD compensation circuits 13, 30, 40, 50, and 60 in the first to seventh examples. However, the PMD light compensation circuit 70 is constituted only by the PMD compensation circuit 21 unlike the PMD compensation circuits 15 13, 30, 40, 50, and 60.

In Fig. 11, a PMD detector 71 detects PMD based on a light signal waveform received by the receiver 14. A PMD light control circuit 72 controls PMD compensation by means of the PMD compensation circuit 70 arranged on the optical transmission line 11 based on the detected result of the PMD detector 71 so that the transmission quality characteristic on reception is the best. The configuration of the PMD control circuit 72 is the same as that of the control circuit 22, and the PMD control circuit 72 is provided correspondingly to the PMD compensated light circuits 21. The configuration of the PMD light compensation circuit 70 is the same as that of the PMD compensated light circuit 21.

In the eighth example, the PMD control circuits 72 are provided on the side of the receiver 14, however the PMD control circuits 72 may be in corporate in the respectively PMD light compensation circuit 70.

In the third example, the polarization adjustment section 26 is provided just after the transmitter 10. However, the PMD control circuit 72 may adjust and control polarization with respect to the polarization adjustment section 26.

According to the eighth example, the PMD light compensation circuit 70 on the optical transmission line 11 is controlled based on PMD in the receiver 14 so that PMD is compensated. As a result, the transmission quality characteristic upon receiving is the best, and the configuration of the PMD light compensation circuit 70 can be minimal. Therefore, the PMD light compensation circuit 70 can be miniaturized.

A ninth example of an optical transmission system will be 20 explained. In the PMD compensation circuits 13, 30, 40, 50, 60, and 70 in the above explained first to eighth examples, the delay difference $\Delta\tau$ is finally compensated by polarization synthesis by means of the polarization beam splitter 27b, and the light signal having constant polarization state is output. In the ninth example, the polarization state of the light signal output from the polarization beam splitter 27b or the light signal obtained by multiplexing the light signals outputted from the polarization beam splitter 27b is adjusted to a desired polarization state. This state is then output.

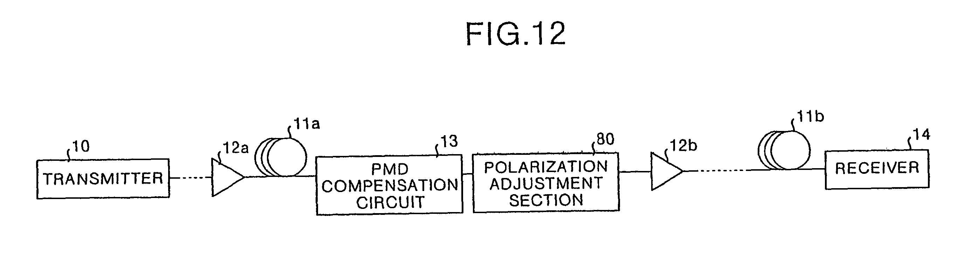

Fig. 12 is a diagram showing a part of the structure of the optical transmission system according to the ninth example. A polarization adjustment section 80 shown in Fig. 12 is arranged on the optical transmission line 11 between the PMD compensation circuit 13 and the optical repeater amplifier 12b. The polarization adjustment section 80 polarizes and adjusts a light signal where PMD is compensated output from the PMD compensation circuit 13. As a result, the polarization adjustment section 80 brings the light signal into the optimal polarization state with respect to the optical transmission line and the optical repeater amplifier at the later stage so as to output the signal to the optical transmission line 11.

Therefore, the polarization state output by the polarization adjustment section 80 can be always adjusted to a constant state. For this reason, for example, the light signal, which has a polarization direction intersects perpendicularly to a polarization direction of excitation-use optical laser to be used in an optical amplifier in the optical repeater amplifier 12b at the later stage, can be output to the optical amplifier. In the optical amplifier in the optical repeater amplifier 12b, the amplification operation is performed optimally when the polarization direction of the input light signal to be amplified intersects perpendicularly to the polarization direction of the excitation-use optical laser. In the case of such an optical amplifier, the polarization direction of the light signal to be input is adjusted by the polarization adjustment section 80 so as to intersect perpendicularly to the polarization direction of the excitation-use optical laser. As a result, the amplification of the optical amplifier can be carried out optimally.

The operation of the optical amplifier is performed optimally when the polarization direction of the input light signal to be amplified is the same as the polarization direction of the excitation-use optical laser. In this case, the polarization adjustment section 80 adjusts the polarization direction of the light signal that the polarization direction of the light signal coincide with the polarization direction of the excitation-use optical laser. The polarization adjustment section 80 outputs the light signal.

The adjustment of the polarization direction by means of 20 the polarization adjustment section 80 is mentioned as one example of the operation of the optical amplifier, but the adjustment is not limited to this. The polarization adjustment section 80 may output a light signal having the polarization direction according to improvement of the function or performance of the optical repeater amplifier 12b at the later stage as long as the adjustment is related to improvement of the function or performance.

According to the ninth example, the polarization state of the light signal where PMD is compensated by the PMD compensation circuit 13 is adjusted by the polarization adjustment section 80. For this reason, the light signal, where the polarization state is adjusted so that an influence of PMD in the optical transmission line at the later stage is decreased, can be outputted. The polarization adjustment section 80 can output the light signal having an arbitrary polarization direction. The polarization adjustment section 80 adjusts the light signal into a light signal having a polarization direction intersecting perpendicularly to the polarization direction of the excitation-use optical laser to be used in the optical amplifier at the later stage so as to output this signal. As a result, the optical amplifier can be operated optimally.

A tenth example of an optical transmission system will be explained. In the above explained ninth example, the polarization adjustment section 80 is provided for the PMD compensation and the stable operation of the optical amplifier. However, in the tenth example, similarly to the polarization adjustment section 26 shown in the third example, the polarization adjustment section 80 adjusts the polarization direction of a light signal so that light signal distortion which is caused by PMD in the receiver 14 becomes minimal.

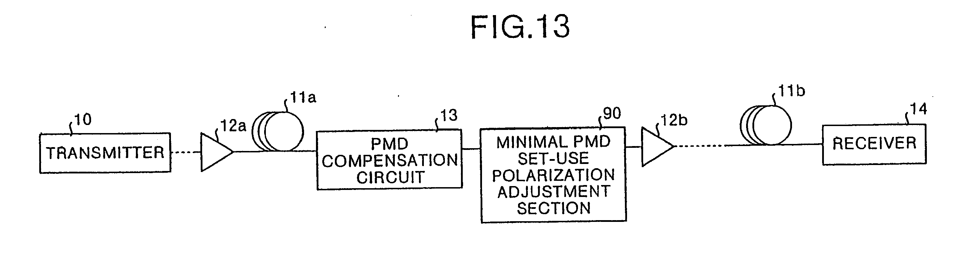

Fig. 13 is a diagram showing a part of the structure of the optical transmission system according to the tenth example. A minimal PMD set-use polarization adjustment section 90 is arranged on the optical transmission line 11 between the PMD compensation circuit 13 and the optical amplifier repeater 12b. The minimal PMD set-use polarization adjustment section 90 further adjusts polarization of a PMD-compensated light signal output from the PMD compensation circuit 13 at the previous stage. As a result, the light signal is brought into a polarization state such that influence of PMD in the optical transmission line at the later stage is reduced so as to be output to the optical transmission line 11. This function is the same as that of the polarization adjustment section 80 in the ninth example.

However, the polarization direction is previously adjusted by the minimal PMD set-use polarization adjusted section 90 into a polarization direction such that an influence of PMD becomes minimal in the receiver 14. The minimal PMD set-use polarization adjustment section 90 makes the adjustment so that the influence of PMD upon the light signal becomes small in the optical transmission line at the later stage in a plurality of places an the optical transmission line 11, for example, per repeated span. For this reason, the effect of the polarization adjustment section 26 in the third example can be further heightened, and the influence of PMD upon the light signal an the optical transmission line at the later stage made smaller. As a result, a PMD compensation distance can be lengthened, and a number of the PMD compensation circuits 13 to be provided an the optical transmission line 11 can be reduced. Namely, the influence of PMD upon the light signal an the optical transmission line is reduced by providing only the minimal PMD set-use polarization adjustment section 90. An optical transmission block of repeated spans, etc. can be obtained without providing the PMD compensation circuit 13.

According to the tenth example, the light signal where PMD is compensated by the PMD compensation circuit 13 is further adjusted by the minimal PMD set-use polarization adjustment section 90. For this reason, the light signal in the polarization state that the influence of PMD is small an the optical transmission line at the later stage can be output. A distance where PMD should be compensated can be lengthened by providing the minimal PMD set-use polarization adjustment section 90. A number of PMD compensation circuits 13 can be reduced so that the whole structure of optical transmission system can be simplified.

In the first to tenth embodiments, the PMD compensation circuits 13, 30, 40, 50, and 60, the PMD light compensation circuit 70, the polarization adjustment section 80 and the minimal PMD set-use polarization adjustment section 90 may be incorporated in the optical repeater amplifier 12 which is close to them. As a result, it is possible to provide the optical transmission system with a small number of housings which satisfies pressure resistance, water resistance and the like.

According to the present invention, the compensation unit, which compensates polarization mode dispersion for one or more repeated spans an the optical transmission line having one or more optical repeater amplifiers, is provided. Therefore, the polarization mode dispersion which occurs between the optical transmission lines of the repeated spans can be compensated. The power coupling between the polarization modes between the optical transmission lines of the repeated spans is weak, and only the polarization mode dispersion that the influence of non-linear optical effect can be ignored occurs. For this reason, the polarization mode dispersion can be compensated securely. As a result, waveform distortion of the light signal due to the polarization mode dispersion is suppressed securely, and the optical receiver can reproduce the light signal waveform securely. A bit error rate an the optical transmission line can be lowered.

According to the present invention, the compensation unit is provided for each optical transmission distance range where the polarization mode dispersion can be compensated according to a degree of the coupling between the polarization modes. The polarization mode dispersion which occurs an the optical transmission line is compensated securely.

For this reason, the waveform deterioration of the light signal due to the polarization mode dispersion can be suppressed securely, and the optical receiver can reproduce the light signal waveform securely. As a result, the bit error rate an the optical transmission line can be lowered.

Further, the wavelength splitter splits an input light wavelength multiplex signal for each wavelength or channel. Polarization mode dispersion compensation units compensate polarization mode dispersion for light signals split by the wavelength splitter. The wavelength multiplexer multiplexes the light signals of each wavelength or channel compensated by the polarization mode dispersion compensation units so as to output the multiplexed signal. The polarization mode dispersion compensation of the light wavelength multiplex signal is compensated in this manner. For this reason, even if the light signal propagated on the optical transmission line is a light wavelength multiplex signal, the wavelength deterioration of the light signal due to the polarization mode dispersion can be suppressed securely. The optical receiver can reproduce the light signal waveform securely. As a result, the bit error rate on the optical transmission line can be lowered.

Further, a compensation unit may be provided at the end or in a vicinity of the end of the optical transmission line, namely, just before the optical receiver so as to compensate polarization mode dispersion which remains finally. As a result, the polarization mode dispersion can be compensated securely, and waveform deterioration of the light signal due to the polarization mode dispersion is suppressed securely. A bit error rate on the optical transmission line can be lowered.

Further, a polarization adjustment unit may be provided at the end or in a vicinity of the end of the optical transmission line. The polarization adjustment unit makes adjustment so that a light signal having a polarization state where quality deterioration of the light signal at the end of the optical transmission line becomes minimal is input. As a result, the quality deterioration of the light signal caused by PMD on the optical transmission line can be suppressed minimally. A number of the compensation units is reduced, and a light signal waveform can be reproduced more securely. As a result, a bit error rate on the optical transmission line can be lowered.

Further, the wavelength splitter, the first wavelength multiplexer, the second wavelength multiplexer, the wavelength multiplexer, the polarization mode dispersion compensation unit and the polarization synthesizing unit which compose the compensation unit may be connected by polarization maintaining fibers so that the polarization between the optical parts in the compensation unit is held. An optical branching process, an optical synthesizing process and the like which are required for compensation of the polarization mode dispersion can be executed securely.

Further, the detector may detect a polarization mode dispersion amount in the optical receiver. A plurality of control units may compensate a light delay difference corresponding to the polarization mode dispersion amount by means of the optical system of the compensation unit or the polarization mode dispersion compensation unit according to the polarization mode dispersion amount detected by the detector. Accordingly, the structures of the compensation unit or the polarization mode dispersion compensation unit arranged on the optical transmission line are miniaturized and simplified. As a result, the whole structure of the optical transmission system can be simplified.

Further, the optical amplification polarization adjustment unit may adjust a light signal so that the light signal has an optimal polarization direction corresponding to a polarization direction of an optical amplification pump laser in the optical repeater amplifier at the later stage. In other words, the light signal has a polarization direction intersecting perpendicularly to the polarization direction of the pump laser to be used in the optical amplifier at the later stage. The light amplification polarization adjustment unit synthesizes the polarization and outputs the light signal to the optical repeater amplifier at the later stage. At least optical amplification of the optical repeater amplifier at the later stage is stabilized by the light signal having the optimal polarization direction input from the optical amplification polarization adjustment unit. Since light signal distortion due to PMD an the optical transmission line at the later stage becomes small due to the polarization adjustment, PMD can be compensated securely. The optical amplifier can be operated optimally by outputting a light signal having an arbitrary polarization direction.

Further, the optical amplification polarization adjustment unit may be connected with the compensation unit at the later stage and adjusts a polarization state of a PMD-compensated light signal. The optical amplification polarization adjustment unit immediately adjusts the light signal so that the light signal has an optimal polarization direction and outputs it. As a result, PMD can be compensated more securely.

Further, the minimal PMD set-use polarization adjustment unit may be provided on the optical transmission line. The polarization adjustment unit adjusts a light signal so that its polarization state is such that quality deterioration of light signal input into the optical receiver becomes minimal. An influence of PMD can be suppressed, and the light signal having the polarization state such that the quality deterioration of the light signal due to the polarization mode dispersion becomes minimal is transmitted. As a result, a distance where PMD should be compensated can be lengthened, and a number of the compensation units can be reduced. The whole structure of the optical transmission system can be simplified.

Further, the compensation unit may be incorporated in the optical repeater amplifier, particularly in the optical amplifier. Environmental resistance structures such as pressure resistance, water resistance and the like which are required respectively in the compensation unit and the optical repeater amplifiers are collected as one structure. As a result, the structure of the optical transmission system can be simplified.

Further, the compensation unit may be incorporated in the optical receiver, particularly in the optical amplifier. PMD of a light signal input into the optical receiver is compensated. Quality deterioration of the light signal due to PMD of the light signal can be suppressed finally.

**Claims**

1. An optical transmission system comprising:

>   an optical transmission line (11);
>   an optical transmitter (10) at one end of said optical transmission line (11);
>   an optical receiver (14) at another end of said optical transmission line (11); and
>   a plurality of optical repeater amplifiers (12) provided on said optical transmission line (11) between said optical transmitter (10) and said optical receiver (14),
>   **characterized in that**
>   a plurality of compensation units (13, 30, 40, 50, 60) which compensate polarization mode dispersion for repeated spans is provided and each of the plurality of compensation units (13, 30, 40, 50, 60) is provided on the optical transmission line (11) in each of the repeated spans, the repeated spans being distances between adjacent optical repeater amplifiers (12) of the plurality of optical repeater amplifiers,

wherein a compensation unit (30) comprises:
a wavelength splitter (31) which splits an input light wavelength multiplex signal for each wavelength or channel;
a polarization mode dispersion compensation unit (33) which compensates polarization mode dispersion of the light signals split by said wavelength splitter (31); and
a wavelength multiplexer (32) which multiplexes the light signals for each wavelength or channel compensated by said polarization mode dispersion compensation unit (33) so as to output the multiplexed signal.

2. An optical transmission system comprising:

an optical transmission line (11);
an optical transmitter (10) at one end of said optical transmission line (11);
an optical receiver (14) at another end of said optical transmission line (11); and
a plurality of optical repeater amplifiers (12) provided on said optical transmission line (11) between said optical transmitter (10) and said optical receiver (14);
**characterized in that**
a plurality of compensation units (13, 30, 40, 50, 60) which compensate polarization mode dispersion for repeated spans is provided and each of the plurality of compensation units is provided on the optical transmission line (11) in each of the repeated spans, the repeated spans being optical transmission distance ranges of said optical transmission line (11) where polarization mode dispersion can be compensated according to a degree of polarization coupling,
wherein a compensation unit (30) comprises:
a wavelength splitter (31) which splits an input light wavelength multiplex signal for each wavelength or channel;
a polarization mode dispersion compensation unit (33) which compensates polarization mode dispersion of the light signals split by said wavelength splitter (31); and
a wavelength multiplexer (32) which multiplexes the light signals for each wavelength or channel compensated by said polarization mode dispersion compensation unit (33) so as to output the multiplexed signal.

3. The optical transmission system according to claims 1 or 2, wherein a compensation unit (13, 30, 40, 50, 60) is further provided at an end or in a vicinity of the end of said optical transmission line (11).

4. The optical transmission system according to any one of claims 1 to 3, wherein a polarization adjustment unit (26, 80), which makes adjustment so that the light signal having a polarization state where quality deterioration of the light signal at the end of said optical transmission line (11) becomes minimal is input, is further provided at a transmission end or in a vicinity of the transmission end of said optical transmission line (11).

5. The optical transmission system according to any one of claims 3 to 4, wherein said wavelength splitter (31, 41, 51, 61), said first wavelength multiplexer (54), said second wavelength multiplexer (52), said wavelength multiplexer (32, 42, 62) and said polarization mode dispersion compensation unit (33, 43, 53, 63) which compose said compensation unit (13, 30, 40, 50, 60) are connected by polarization maintaining fibers.

6. The optical transmission system according to any one of claims 1 to 5,
wherein a compensation unit (13, 30, 40, 50, 60) or polarization mode dispersion compensation unit comprises optical systems which compensate a light delay difference according to a polarization mode dispersion amount; and
wherein said optical receiver (14) comprises:

a detector (23,71) which detects a polarization mode dispersion amount in said optical receiver (14); and
a plurality of control units (22,72) which control said optical systems using the polarization mode dispersion amount detected by said detector (23).

7. The optical transmission system according to any one of claims 1 to 6, further comprising:

an optical amplification polarization adjustment unit (80) which adjusts a light signal so that the light signal has an optimal polarization direction corresponding to the polarization direction of an optical amplification pump laser in an optical repeater amplifier (12) at the later stage and synthesizes polarization and outputs the light signal to said optical repeater amplifier at the later stage,
wherein at least optical amplification of said optical repeater amplifier (12) at the later stage is performed optimally by the light signal having the optimal polarization direction input from said optical amplification polarization adjustment unit (80).

8. The optical transmission system according to claim 7, wherein said optical amplification polarization adjustment unit (80) is connected to a later stage with respect to a compensation unit (13, 30, 40, 50, 60).

9. The optical transmission system according to any one of claims 1 to 6, further comprising a minimal PMD set-use polarization adjustment unit (90), which adjusts the polarization state of the input light signal so that the light signal having a polarization state where the quality deterioration of the light signal becomes minimal is input into said optical receiver (14), on said optical transmission line (11) .

10. The optical transmission system according to any one of claims 1 to 9, wherein a compensation unit (13, 30, 40, 50, 60) is incorporated in an optical repeater amplifier (12).

11. The optical transmission system according to any one of claims 1 to 10, wherein a compensation unit (13, 30, 40, 50, 60) is incorporated in said optical receiver (14).

**Patentansprüche**

1. Optisches Übertragungssystem, welches aufweist:

   eine optische Übertragungsleitung (11);
   einen optischen Sender (10) an einem Ende der optisches Übertragungsleitung (11);
   einen optischen Empfänger (14) an einem anderen Ende der optischen Übertragungsleitung (11); und
   mehrere optische Leitungsverstärker (12), die in der optischen Übertragungsleitung (11) zwischen dem optischen Sender (10) und dem optischen Empfänger (14) vorgesehen sind,
   **dadurch gekennzeichnet, dass**
   mehrere Kompensationseinheiten (13, 30, 40, 50, 60), die eine Polarisationsmodenabweichung für Verstärkungsabstände kompensieren, vorgesehen sind und jede der mehreren Kompensationseinheiten (13, 30, 40, 50, 60) in der optischen Übertragungsleitung (11) in jedem der Verstärkungsabstände vorgesehen ist, wobei die Verstärkungsabstände Abstände zwischen benachbarten optischen Leitungsverstärkern (12) der mehreren optischen Leitungsverstärker sind,
   wobei eine Kompensationseinheit (30) aufweist:

      einen Wellenlängenteiler (31), der ein eingegebenes Lichtwellenlängen-Multiplexsignal für jede Wellenlänge oder jeden Kanal teilt;
      eine Polarisationsmodenabweichungs-Kompensationseinheit (33), die eine Polarisationsmodenabweichung der von dem Wellenlängenteiler (31) geteilten Lichtsignale kompensiert; und
      einen Wellenlängenmultiplexierer (32), der die Lichtsignale für jede Wellenlänge oder jeden Kanal, die durch die Polarisationsmodenabweichungs-Kompensationseinheit (33) kompensiert wurden, multiplexiert, um das Multiplexsignal auszugeben.

2. Optisches Übertragungssystem, welches aufweist:

   eine optische Übertragungsleitung (11);
   einen optischen Sender (10) an einem Ende der optischen Übertragungsleitung (11);
   einen optischen Empfänger (14) an einem anderen Ende der optischen Übertragungsleitung (11); und
   mehrere optische Leitungsverstärker (12), die in der optischen Übertragungsleitung (11) zwischen dem optischen Sender (10) und dem optischen Empfänger (14) vorgesehen sind;
   **dadurch gekennzeichnet, dass**
   mehrere Kompensationseinheiten (13, 30, 40, 50, 60), die eine Polarisationsmodenabweichung für Verstärkungsabstände kompensieren, vorgesehen sind und jede der mehreren Kompensationseinheiten in der optischen Übertragungsleitung (11) in jedem der Verstärkungsabstände vorgesehen ist,
   wobei die Verstärkungsabstände optische Übertragungsabstandsbereiche der optischen Übertragungsleitung (11) sind, in der eine Polarisationsmodenabweichung gemäß einem Grad der Polarisationskopplung kompensiert werden kann,
   wobei eine Kompensationseinheit (30) aufweist:

      einen Wellenlängenteiler (31), der ein eingegebenes Lichtwellenlängen-Multiplexsignal für jede Wellenlänge oder jeden Kanal teilt;

eine Polarisationsmodenabweichungs-Kompensationseinheit (33), die eine Polarisationsmodenabweichung der durch den Wellenlängenteiler (31) geteilten Lichtsignale kompensiert; und
einen Wellenlängenmultiplexierer (32), der Lichtsignale für jede Wellenlänge oder jeden Kanal, die durch die Polarisationsmodenabweichungs-Kompensationseinheit (33) kompensiert wurden, multiplexiert, um das Multiplexsignal auszugeben.

3. Optisches Übertragungssystem nach Anspruch 1 oder 2, bei dem eine Kompensationseinheit (13, 30, 40, 50, 60) weiterhin an einem Ende oder in der Nähe des Endes der optischen Übertragungsleitung (11) vorgesehen ist.

4. Optisches Übertragungssystem nach einem der Ansprüche 1 bis 3, bei dem eine Polarisationseinstelleinheit (26, 80), die eine Einstellung derart durchführt, dass das Lichtsignal mit einem Polarisationszustand, bei dem eine Qualitätsverschlechterung des Lichtsignals an dem Ende der optischen Übertragungsleitung (11) minimal wird, eingegeben wird, weiterhin an einem Übertragungsende oder in der Nähe des Übertragungsendes der optischen Übertragungsleitung (11) vorgesehen ist.

5. Optisches Übertragungssystem nach einem der Ansprüche 3 oder 4, bei dem der Wellenlängenteiler (31, 41, 51, 61), der erste Wellenlängenmultiplexierer (54), der zweite Wellenlängenmultiplexierer (52), der Wellenlängenmultiplexierer (32, 42, 62) und die Polarisationsmodenabweichungs-Kompensationseinheit (33, 43, 53, 63), die die Kompensationseinheit (13, 30, 40, 50, 60) bilden, durch die Polarisation aufrecht erhaltende Fasern verbunden sind.

6. Optisches Übertragungssystem nach einem der Ansprüche 1 bis 5, bei dem eine Kompensationseinheit (13, 30, 40, 50, 60) oder Polarisationsmodenabweichungs-Kompensationseinheit optisches Systeme aufweist, die eine Lichtverzögerungsdifferenz gemäß einer Größe der Polarisationsmodenabweichung kompensieren; und
wobei der optische Empfänger (14) aufweist:

einen Detektor (23, 71), der die Größe einer Polarisationsmodenabweichung in dem optischen Empfänger (14) erfasst; und
mehrere Steuereinheiten (22, 72), die die optischen Systeme unter Verwendung der von dem Detektor (23) erfassten Größe der Polarisationsmodenabweichung steuern.

7. Optisches Übertragungssystem nach einem der Ansprüche 1 bis 6, weiterhin aufweisend:

eine optische Verstärkungspolarisations-Einstelleinheit (80), die ein Lichtsignal so einstellt, dass das Lichtsignal eine optimale Polarisationsrichtung entsprechend der Polarisationsrichtung eines optischen Verstärkungspumplasers in einem optischen Leitungsverstärker (12) in der hinteren Stufe hat und die Polarisation synthetisiert und das Lichtsignal zu dem optischen Leitungsverstärker in der hinteren Stufe ausgibt,
wobei zumindest eine optische Verstärkung des optischen Leitungsverstärkers (12) in der hinteren Stufe durch das Lichtsignal mit der optimalen Polarisationsrichtung, das von der optischen Verstärkungspolarisations-Einstelleinheit (80) eingegeben wurde, optimal durchgeführt wird.

8. Optisches Übertragungssystem nach Anspruch 7, bei dem die optische Verstärkungspolarisations-Einstelleinheit (80) mit einer hinteren Stufe mit Bezug auf eine Kompensationseinheit (13, 30, 40, 50, 60) verbunden ist.

9. Optisches Übertragungssystem nach einem der Ansprüche 1 bis 6, weiterhin aufweisend eine Polarisationseinstelleinheit (90) für eine minimale PMD-Einstellung/Verwendung, die den Polarisationszustand des eingegebenen Lichtsignals so einstellt, dass das Lichtsignal mit einem Polarisationszustand, bei dem die Qualitätsverschlechterung des Lichtsignals minimal wird, in den optischen Verstärker (14) eingegeben wird, in der optischen Übertragungsleitung (11).

10. Optisches Übertragungssystem nach einem der Ansprüche 1 bis 9, bei dem eine Kompensationseinheit (13, 30, 40, 50, 60) in einem optischen Leitungsverstärker (12) enthalten ist.

11. Optisches Übertragungssystem nach einem der Ansprüche 1 bis 10, bei dem eine Kompensationseinheit (13, 30, 40, 50, 60) in dem optischen Empfänger (14) enthalten ist.

**Revendications**

1. Système de transmission optique comprenant :

    une ligne de transmission optique (11) ;
    un émetteur optique (10) à une extrémité de ladite ligne de transmission optique (11) ;
    un récepteur optique (14) à une autre extrémité de ladite ligne de transmission optique (11) ; et
    une pluralité d'amplificateurs répétiteurs optiques (12) prévus sur ladite ligne de transmission optique (11) entre ledit émetteur optique (10) et ledit récepteur optique (14),
    **caractérisé en ce que**
    une pluralité d'unités de compensation (13, 30, 40, 50, 60) qui compensent une dispersion de mode de polarisation pour des intervalles répétés est prévue et chacune de la pluralité d'unités de compensation (13, 30, 40, 50, 60) est prévue sur la ligne de transmission optique (11) dans chacun des intervalles répétés, les intervalles répétés étant des distances entre des amplificateurs répétiteurs optiques adjacents (12) de la pluralité d'amplificateurs répétiteurs optiques,
    dans lequel une unité de compensation (30) comprend :

        un séparateur de longueur d'onde (31) qui sépare un signal lumineux d'entrée à multiplexage de longueur d'onde pour chaque longueur d'onde ou canal ;
        une unité de compensation de dispersion de mode de polarisation (33) qui compense la dispersion de mode de polarisation des signaux lumineux séparés par ledit séparateur de longueur d'onde (31) ; et
        un multiplexeur de longueur d'onde (32) qui multiplexe les signaux lumineux pour chaque longueur d'onde ou canal compensé(e) par ladite unité de compensation de dispersion de mode de polarisation (33) de façon à transmettre le signal multiplexé.

2. Système de transmission optique comprenant :

    une ligne de transmission optique (11) ;
    un émetteur optique (10) à une extrémité de ladite ligne de transmission optique (11) ;
    un récepteur optique (14) à une autre extrémité de ladite ligne de transmission optique (11) ; et
    une pluralité d'amplificateurs répétiteurs optiques (12) prévus sur ladite ligne de transmission optique (11) entre ledit émetteur optique (10) et ledit récepteur optique (14),
    **caractérisé en ce que**
    une pluralité d'unités de compensation (13, 30, 40, 50, 60) qui compensent une dispersion de mode de polarisation pour des intervalles répétés est prévue et chacune de la pluralité d'unités de compensation est prévue sur la ligne de transmission optique (11) dans chacun des intervalles répétés, les intervalles répétés étant des plages de distances de transmission optique de ladite ligne de transmission optique (11) sur lesquelles une dispersion de mode de polarisation peut être compensée selon un degré de couplage de polarisation,
    dans lequel une unité de compensation (30) comprend :

        un séparateur de longueur d'onde (31) qui sépare un signal lumineux d'entrée à multiplexage de longueur d'onde pour chaque longueur d'onde ou canal ;
        une unité de compensation de dispersion de mode de polarisation (33) qui compense la dispersion de mode de polarisation des signaux lumineux séparés par ledit séparateur de longueur d'onde (31) ; et
        un multiplexeur de longueur d'onde (32) qui multiplexe les signaux lumineux pour chaque longueur d'onde ou canal compensé(e) par ladite unité de compensation de dispersion de mode de polarisation (33) de façon à transmettre le signal multiplexé.

3. Système de transmission optique selon la revendication 1 ou 2, dans lequel une unité de compensation (13, 30, 40, 50, 60) est en outre prévue à une extrémité de ou à proximité de l'extrémité de ladite ligne de transmission optique (11).

4. Système de transmission optique selon l'une quelconque des revendications 1 à 3, dans lequel une unité d'ajustement de polarisation (26, 80) qui effectue un ajustement de telle sorte que le signal lumineux ayant un état de polarisation dans lequel la détérioration de la qualité du signal lumineux à l'extrémité de ladite ligne de transmission optique (11) devient minimale soit entré, est en outre prévue à une extrémité de transmission ou à proximité de l'extrémité de transmission de ladite ligne de transmission optique (11).

**5.** Système de transmission optique selon l'une quelconque des revendications 3 à 4, dans lequel ledit séparateur de longueur d'onde (31, 41, 51, 61), ledit premier multiplexeur de longueur d'onde (54), ledit second multiplexeur de longueur d'onde (52), ledit multiplexeur de longueur d'onde (32, 42, 62) et ladite unité de compensation de dispersion de mode de polarisation (33, 43, 53, 63) qui composent ladite unité de compensation (13, 30, 40, 50, 60) sont reliés par des fibres de maintien de polarisation.

**6.** Système de transmission optique selon l'une quelconque des revendications 1 à 5,
dans lequel une unité de compensation (13, 30, 40, 50, 60) ou une unité de compensation de dispersion de mode de polarisation comprend des systèmes optiques qui compensent une différence de retard lumineux selon une quantité de dispersion de mode de polarisation ; et
dans lequel ledit récepteur optique (14) comprend :

un détecteur (23, 71) qui détecte une quantité de dispersion de mode de polarisation dans ledit récepteur optique (14) ; et
une pluralité d'unités de commande (22, 72) qui contrôlent lesdits systèmes optiques en utilisant la quantité de dispersion de mode de polarisation détectée par ledit détecteur (23).

**7.** Système de transmission optique selon l'une quelconque des revendications 1 à 6, comprenant en outre :

une unité d'ajustement de polarisation à amplification optique (80) qui ajuste un signal lumineux de telle sorte que le signal lumineux possède une direction de polarisation optimale correspondant à la direction de polarisation d'un laser à pompe à amplification optique dans un amplificateur répétiteur optique (12) au dernier étage, et synthétise la polarisation et transmet le signal lumineux audit amplificateur répétiteur optique au dernier étage, dans lequel au moins l'amplification optique dudit amplificateur répétiteur optique (12) au dernier étage est effectuée optimalement par le signal lumineux ayant la direction de polarisation optimale entré par ladite unité d'ajustement de polarisation à amplification optique (80).

**8.** Système de transmission optique selon la revendication 7, dans lequel ladite unité d'ajustement de polarisation à amplification optique (80) est reliée à un dernier étage par rapport à une unité de compensation (13, 30, 40, 50, 60).

**9.** Système de transmission optique selon l'une quelconque des revendications 1 à 6, comprenant en outre une unité d'ajustement de polarisation à PMD minimale définie (90), qui ajuste l'état de polarisation du signal lumineux d'entrée de telle sorte que le signal lumineux ayant un état de polarisation dans lequel la détérioration de la qualité du signal lumineux devient minimale soit entré dans ledit récepteur optique (14), sur ladite ligne de transmission optique (11).

**10.** Système de transmission optique selon l'une quelconque des revendications 1 à 9, dans lequel une unité de compensation (13, 30, 40, 50, 60) est incorporée à un amplificateur répétiteur optique (12).

**11.** Système de transmission optique selon l'une quelconque des revendications 1 à 10, dans lequel une unité de compensation (13, 30, 40, 50, 60) est intégrée audit récepteur optique (14).

# FIG.1

EP 1 100 217 B1

# FIG.2

# FIG.3

# FIG.4A

[BEFORE PMD COMPENSATION]

# FIG.4B

[AFTER PMD COMPENSATION]

# FIG.5

EP 1 100 217 B1

FIG.6

FIG.7

30 PMD COMPENSATION CIRCUIT

$\lambda_1, \lambda_2, \cdots, \lambda_n$

11b

32

MULTIPLEXER

$\lambda_1$

$\lambda_2$

$\lambda_3$

$\cdots$

$\lambda_n$

33-1 PMD COMPENSATION CIRCUIT

33-2 PMD COMPENSATION CIRCUIT

33-3 PMD COMPENSATION CIRCUIT

$\cdots$

33-n PMD COMPENSATION CIRCUIT

31 WAVELENGTH SPLITTER

11a

$\lambda_1, \lambda_2, \cdots, \lambda_n$

# FIG.8

$\lambda_1, \lambda_2, \cdots, \lambda_n$

11a

WAVELENGTH SPLITTER

41

43-1
PMD COMPENSATION CIRCUIT

$\lambda_1 \sim \lambda_a$

43-2
PMD COMPENSATION CIRCUIT

$\lambda_b \sim \lambda_c$

43-3
PMD COMPENSATION CIRCUIT

$\lambda_d \sim \lambda_e$

43-k
PMD COMPENSATION CIRCUIT

$\lambda_m \sim \lambda_n$

42

MULTIPLEXER

$\lambda_1, \lambda_2, \cdots, \lambda_n$

11b

# FIG.9

50 PMD COMPENSATION CIRCUIT

$\lambda_1, \lambda_2, \cdots, \lambda_n$

11a

51 WAVELENGTH SPLITTER

54-1 MULTIPLEXER — 53-1 PMD COMPENSATION CIRCUIT — $\lambda_1 \sim \lambda_a$

54-2 MULTIPLEXER — 53-2 PMD COMPENSATION CIRCUIT — $\lambda_b \sim \lambda_c$

54-3 MULTIPLEXER — 53-3 PMD COMPENSATION CIRCUIT — $\lambda_d \sim \lambda_e$

54-k MULTIPLEXER — 53-k PMD COMPENSATION CIRCUIT — $\lambda_m \sim \lambda_n$

52 MULTIPLEXER

$\lambda_1, \lambda_2, \cdots, \lambda_n$

11b

EP 1 100 217 B1

# FIG.10

# FIG.11

EP 1 100 217 B1

EP 1 100 217 B1

# FIG.12

# FIG.13

EP 1 100 217 B1

# FIG.14

# FIG.15